**Europäisches Patentamt**

(19) **European Patent Office**

**Office européen des brevets**

(11) Numéro de publication: **0 231 675**
**B1**

(12) # FASCICULE DE BREVET EUROPEEN

(45) Date de publication du fascicule du brevet:
15.02.89

(51) Int. Cl.⁴: **B65D 90/08,** B65D 90/02,
F16B 5/08, B23K 9/23

(21) Numéro de dépôt: **86402580.4**

(22) Date de dépôt: **20.11.86**

(54) **Capacités composites métalloplastiques assemblés par soudure et leur procédé de fabrication.**

(30) Priorité: **29.11.85 FR 8517736**

(43) Date de publication de la demande:
**12.08.87 Bulletin 87/33**

(45) Mention de la délivrance du brevet:
**15.02.89 Bulletin 89/7**

(84) Etats contractants désignés:
**AT BE CH DE ES FR GB GR IT LI LU NL SE**

(56) Documents cités:
**DE-A- 1 947 398**
**DE-B- 2 226 484**
**FR-A- 2 004 830**
**GB-A- 842 280**
**GB-A- 1 108 813**

(73) Titulaire: **ATOCHEM, 4 & 8, Cours Michelet La Défense 10, F-92800 Puteaux(FR)**

(72) Inventeur: **Lescaut, Pierre Louis, Vieille Sente du Mascrier, F-27300 Bernay(FR)**

(74) Mandataire: **Rochet, Michel et al, ATOCHEM Département Propriété Industrielle La Défense 10 4 & 8 Cours Michelet, F-92800 Puteaux(FR)**

## Description

La présente invention se situe dans le domaine de l'assemblage par soudure autogène de capacités de grande importance (10.000 litres et au dessus) constitués d'une pluralité de plaques composites métalloplastiques soudées bord à bord. Ces capacités sont destinées au stockage de produits chimiques divers, tels que: liquides pétroliers, l'eau, les solutions et lessives chimiques.

Ces capacités sont caractérisées en ce que les plaques sont munies sur les bords de l'une ou des deux faces et sur les tranches d'une couche métallique d'une composition inoxydable et sur l'une ou les deux faces d'un revêtement anti-corrosion thermosensible.

La fabrication comporte une première étape réalisée en atelier. Les plaques reçoivent sur leur périphérie sur une largeur mesurée à partir de chaque bord comprise entre 20 et 30 mm, un revêtement effectué à l'aide d'un chalumeau oxyacétylénique selon un procédé appelé schoopage d'un alliage métallique inoxydable constitué de fer et de l'un des métaux du groupe chrome, nickel, cobalt. Cet alliage est généralement mis en oeuvre à l'état de poudre, et il est projeté également sur la tranche des plaques.

L'épaisseur d'alliage déposé varie suivant les applications de 200 à 600 microns.

Au cours de cette première étape réalisée en atelier, on dépose sur la ou les paroi(s) des plaques un revêtement qui peut être constitué de résines thermoplastiques choisies dans le groupe des polyamides, des résines fluorées, des polyéthylènes ou du PVC.

Ces résines sont avantageusement mises en oeuvre à partir de poudres fines d'une granulométrie comprise entre 10 et 400 microns et par des procédés connus, tels que le poudrage électrostatique, ou le pistolage.

Une réserve comprise entre 10 et 20 mm est respectée sur chaque bord des plaques à assembler, pour préserver le revêtement thermosensible de la fusion, ou de la pyrolyse provoquées par l'élévation de température durant l'opération de soudure autogène réalisée dans la deuxième étape sur chantier pour l'assemblage des plaques.

La réserve respectée sur chaque bord et la largeur revêtue d'alliage métallique inoxydable déposée au préalable doit être telle que le revêtement thermosensible anticorrosion recouvre toujours le dépôt métallique inoxydable de façon à assurer la continuité de la protection de la paroi de la plaque que l'on souhaite protéger.

La zone de recouvrement ne doit pas être inférieure à 10 mm mesurés dans le sens de la perpendiculaire au bord considéré pour obtenir avec sécurité la continuité des revêtements protecteurs.

On comprendra mieux la disposition relative des couches des deux revêtements à l'aide des figures qui représentent:

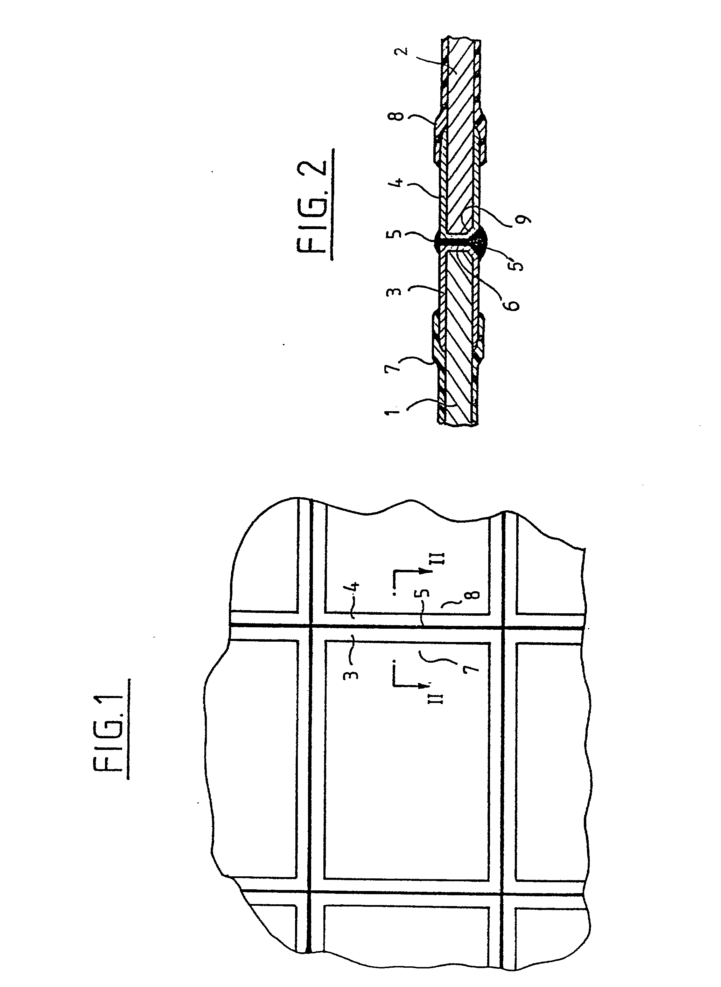

— La figure 1 une vue en élévation des plaques assemblées bord à bord

— La figure 2 une coupe suivant II II des mêmes plaques.

La première plaque est représentée en (1), et en (2) la seconde plaque. En (3) et (4) sont les revêtements préalables par le métal inoxydable de chaque plaque de part et d'autre de la section d'assemblage. En (5) se voit le garnissage de la section terminale de chaque plaque par projection d'alliage inoxydable au pistolet oxyacétylénique. En (7) et (8) se voit le garnissage par le revêtement thermosensible recouvrant en partie le précédent.

Les sections en regard des deux plaques ont reçu un chanfrein (9) de telle sorte qu'on peut remplir le fond du chanfrein du métal inoxydable (5') fourni par un premier cordon d'apport en alliage de composition identique à celle du revêtement appliqué au cours de la première étape. Ainsi est établie la liaison entre les revêtements inoxydables des deux extrémités des tubes en regard.

Le reste du chanfrein est rempli par le métal (6) en fusion du second cordon d'apport, réalisé dans le métal constituant la plaque, si l'on veut se contenter d'une protection anticorrosion étendue à l'une seulement des deux parois de la capacité réalisée.

## Revendications

1. Capacités métalliques de grand volume obtenues par le soudage bord à bord de plaques (1, 2), caractérisées en ce que les plaques sont munies sur les bords de l'une ou des deux faces et sur les tranches d'une couche métallique d'une composition inoxydable (3, 4) et sur l'une ou les deux faces d'un revêtement anticorrosion thermosensible (7, 8).

2. Capacités selon la revendication 1, caractérisées en ce que le revêtement métallique inoxydable a des propriétés anticorrosion et est obtenu à partir d'un alliage d'un des métaux du groupe chrome, nickel, cobalt allié au fer.

3. Capacités selon la revendication 1, caractérisées en ce que le revêtement anticorrosion thermosensible est constitué par une résine thermoplastique choisie dans le groupe des résines polyamides, des résines fluorées, des polyéthylènes ou du PVC.

4. Procédé d'assemblage par soudage bord à bord de plaques pour fabriquer des capacités selon les revendications 2 et 3, ces plaques (1, 2) étant munies sur leurs bords et sur leurs tranches d'une couche métallique (3, 4) d'une épaisseur de 200 à 600 microns à l'aide d'un pistolet oxyacétylénique et revêtues sur l'une ou les deux faces d'un revêtement anticorrosion thermosensible (7, 8), dont le bord est en retrait du bord de la plaque d'une quantité ou réserve comprise entre 10 et 20 mm, ce revêtement thermosensible recouvrant la couche métallique inoxydable sur une largeur d'au moins 20 mm, le soudage intervenant par fusion d'un cordon d'apport en métal inoxydable de même composition que le revêtement metallique et la couche de revêtement thermosensible étant dans ces conditions suffisamment éloignée de la zone de fusion du cordon d'apport pour éviter la fusion et la pyrolyse de la résine thermoplastique constituant ce revêtement.

**Patentansprüche**

1. Metallische Behälter großen Volumens, hergestellt durch Stumpfnahtschweißung von Platten (1, 2), dadurch gekennzeichnet, daß die Platten an den Rändern auf einer oder beiden Seiten und auf den Schnittflächen mit einer metallischen Schicht nichtrostender Zusammensetzung (3, 4) versehen sind und auf einer oder beiden Seiten mit einem wärmeempfindlichen Korrosionsschutzüberzug (7, 8).

2. Behälter nach Patentanspruch 1, dadurch gekennzeichnet, daß der nichtrostende metallische Überzug korrosionsverhütende Eigenschaften hat und aus einer Legierung eines der Metalle der Gruppe Chrom, Nickel, Kobalt mit Eisen hergestellt wird.

3. Behälter nach Patentanspruch 1, dadurch gekennzeichnet, daß der wärmeempfindliche Korrosionsschutzüberzug aus einem thermoplastischen Harz aus der Gruppe der Polyamidharze, der fluorierten Harze, der Polyethylene oder PVC besteht.

4. Verfahren zum Zusammensetzen durch Stumpfnahtschweißung von Platten zur Herstellung von Behältern gemäß den Patentansprüchen 2 und 3, wobei diese Platten (1, 2) an ihren Rändern und auf ihren Schnittflächen mit Hilfe eines Acetylenschweißbrenners mit einer metallischen Schicht (3, 4) einer Dicke von 200 bis 600 μ versehen sind und auf einer oder beiden Seiten mit einem wärmeempfindlichen Korrosionsschutzüberzug (7, 8), dessen Rand gegenüber dem Rand der Platte zwischen 10 und 20 mm nach innen versetzt ist und der die nichtrostende metallische Schicht auf einer Breite von mindestens 20 mm überdeckt, und wobei die Schweißung durch Schmelzen eines Schweißdrahtes aus nichtrostendem Metall der Zusammensetzung des metallischen Überzuges erfolgt und die Schicht des wärmeempfindlichen Überzuges unter diesen Umständen hinreichend weit von der Schmelzzone des Schweißdrahtes entfernt ist, um das Schmelzen und die Pyrolyse des diesen Überzug bildenden thermoplastischen Harzes zu vermeiden.

**Claims**

1. Large-capacity metal vessels obtained by butt welding plates (1, 2), characterized in that the plates are provided on the edges of one or of both faces and on the cut sections with a metal layer of a stainless composition (3, 4) and on one or both faces with a heat-sensitive anti-corrosion coating (7, 8).

2. Vessels according to Claim 1, characterized in that the stainless metal coating has anticorrosion properties and is obtained from an alloy of one of the metals from the group of chromium, nickel and cobalt alloyed with iron.

3. Vessels according to Claim 1, characterized in that the heat-sensitive anticorrosion coating consists of a thermoplastic resin chosen from the group of polyamide resins, fluoro resins, polyethylenes or PVC.

4. Process of assembly by butt welding plates for manufacturing vessels according to Claims 2 and 3, these plates (1, 2) being provided on their edges and on their cut sections with a metal layer (3, 4) 200 to 600 microns in thickness with the aid of an oxyacetylene gun and being coated on one or both faces with a heat-sensitive anticorrosion coating (7, 8) whose edge is set back from the edge of the plate by a quantity or margin of between 10 and 20 mm, this heat-sensitive coating covering the stainless metal layer over a width of at least 20 mm, the welding being effected by melting an added bead of stainless metal of the same composition as the metal coating and the heat-sensitive coating layer being in these conditions sufficiently distant from the region of melting of the added bead to prevent the melting and the pyrolysis of the thermoplastic resin forming this coating.

FIG.1

FIG. 2